# EUROPÄISCHE PATENTANMELDUNG

(11) **EP 2 213 886 A2**
(43) Veröffentlichungstag der Anmeldung: **04.08.2010**
(21) Anmeldenummer: 10151875.1
(22) Anmeldetag: 28.01.2010
(51) Int. Cl.: F16B 3/00, F16B 19/10

(54) **System zum Befestigen eines Anbauteils an einem Trägerbauteil und Verfahren zum Herstellen des Trägerbauteils**

(30) Priorität: 29.01.2009 DE 102009007721
(71) Anmelder: Schneider Form GmbH, 73265 Dettingen-Teck (DE)
(72) Erfinder: Langer, Andreas, 73061, Ebersbach (DE)
(74) Vertreter: Witte, Weller & Partner

(57) **Zusammenfassung**

Es wird offenbart ein System (10) zum Befestigen eines Anbauteils (58) an einem Trägerbauteil (12), wobei das Trägerbauteil (12) an einer seiner Oberflächen (17) mit mindestens einem Rippenpaar (18) versehen ist, wobei sich Rippen (20, 22) eines jeden Rippenpaars (18) in einer Längsrichtung (24) parallel gegenüberliegen und wobei jede Rippe (20, 22) in einer Höhenrichtung (28) zumindest einen Rippenabschnitt (90) aufweist, der zur gegenüberliegenden Rippe (22, 20) hin geneigt ist, wobei das System (10) mindestens ein Rastelement (14) und ein Fixierelement (16) aufweist, die jeweils ausgebildet sind, mit den Rippen (20, 22) derart verbunden zu werden, dass eine Nase (32) des Rastelements (14) in einen Rastraum (31) zwischen den Rippen (20, 22) des Rippenpaars (18) eingreift, wobei die Nase (32) so ausgebildet ist, dass die Rippen (20, 22) während eines Einführens (66) der Nase (32) zwischen die Rippen (20, 22) nach außen elastisch auseinander gedrückt (62, 64) werden und sich anschließend nach innen, in Richtung des Rastraums (31) zurückbewegen, so dass die Nase (32) im Zustand des Eingriffs von den Rippen (20, 22) festgehalten wird, und dass erste Fixierbacken (42, 42') des Fixierelements (16), das in Längsrichtung benachbart zu der Nase (32) des Rastelements (14) angeordnet wird, die Rippen (20, 22) von außen derart fixiert halten, dass ein Aufbiegen der Rippen (20, 22) durch eine Bewegung der Nase (32) aus dem Rastraum (31) verhindert wird. Ferner wird ein Verfahren zum Herstellen eines Trägerbauteils offenbart.

## Beschreibung

Die vorliegende Erfindung betrifft ein System zum Befestigen eines Anbauteils an einem Trägerbauteil sowie ein Verfahren zum spritzgusstechnischen Herstellen des Trägerbauteils.

Vorrichtungen zum Befestigen eines Anbauteils an einem Trägerbauteil sind allgemein bekannt. Derartige Vorrichtungen sind z.B. aus der DE 31 14 283 A1 oder der WO 2007/073821 A1 bekannt.

Das Befestigungssystem der WO 2007/073821 macht es erforderlich, dass das Trägerbauteil mit einer Öffnung bzw. Bohrung zur Aufnahme eines Lagerteils versehen wird, was die Struktur des Trägerbauteils schwächt. Das Lagerteil dient zum Lagern des Anbauteils.

Viele herkömmliche Befestigungssysteme sind in Form von Klemmen bzw. Clips realisiert. Diese Clips weisen oft Hinterschnitte auf, die zur Aufnahme des Anbauteils dienen und die in Form von Rastnasen ausgebildet sind. Zur Herstellung dieser Bauteile sind Formwerkzeuge mit Schiebern erforderlich. Des Weiteren sind Befestigungsrippen oder -flansche bekannt, deren Anbindung an den Träger meistens im Bereich von sog. Designkanten bzw. Designnuten erfolgt, um Abzeichnungen auf einer Sicht- bzw. Außenseite zu kaschieren. Gerade im Bereich der Automobilindustrie werden Befestigungsclips für z.B. Kabelstränge an der nicht sichtbaren Innenseite von z.B. Karosserieteilen angeformt. Die Positionen derartiger Clips liegen vorzugsweise im Bereich von außen sichtbaren Designkanten. Diese Applikationsorte werden deshalb ausgewählt, damit beim Spritz- bzw. Druckgießen entstehende Einfallstellen, die durch "nachsinkendes" Material hervorgerufen werden, welches auf der gegenüberliegenden Seite für die Anformung des Befestigungselements benötigt wird, nach einer erfolgten Lackierung des Bauteils nicht zu optischen Verzerrungen an der sichtbaren Außenseite des Bauteils führen. Das Material schwindet beim Erstarren der Schmelze. Aufgrund des erhöhten Materialeinsatzes in Bereichen, wo z.B. Rippen vorgesehen sind, kommt es zum etwas späteren Erstarren und dadurch zu Einfallstellen. Aus diesem Grund werden bei der vorliegenden Erfindung, wie es nachfolgend noch ausführlicher beschrieben werden wird, die Rippen in einem Verhältnis 1:3 angebunden.

Ein weiterer Nachteil bei herkömmlichen Befestigungselementen, wie z.B. Rastnasenverbindungen, ergibt sich bei der Demontage des Befestigungssystems. Rammschutzleisten, Verkleidungsteile, etc. werden u.A. auf Rastnasenverbindungen aufgesteckt. Um eine Rammschutzleiste zu lösen, wird die Rastnasenverbindung z.B. mit Hilfe eines Schraubenziehers gewaltsam aufgehebelt. Schon bereits nach einem zwei- bis dreimaligen Lösen der Rammschutzleiste ist die Rastnase üblicherweise derart beschädigt, dass die Rastnasenverbindung ihre Funktion verliert. Die Automobilindustrie fordert jedoch bis zu zehn Öffnungs- und Schließzyklen.

Ferner machen herkömmliche Befestigungssysteme hohe Bautiefen (> 10 mm) erforderlich. Befestigungssysteme, die flacher bauen, sind in der Regel nicht dazu geeignet, gewünschte Haltekräfte zu gewährleisten.

Ein weiterer Nachteil herkömmlicher Befestigungssysteme ist die große Anzahl von Elementen, aus denen das Befestigungssystem besteht. Häufig weisen herkömmliche Befestigungssysteme Federklammern oder ähnliche Fixierungselemente auf, die eine Montage des Befestigungssystems erschweren können.

Es ist daher eine Aufgabe der vorliegenden Erfindung, ein verbessertes Befestigungssystem sowie ein einfaches Verfahren zum Herstellen eines Trägerbauteils mittels Spritz- bzw. Druckgusstechniken vorzusehen.

Diese Aufgabe wird mit dem erfindungsgemäßen System zum Befestigen eines Anbauteils an einem Trägerbauteil gelöst, wobei das Trägerbauteil an einer seiner Oberflächen mit mindestens einem Rippenpaar versehen ist, wobei sich Rippen eines jeden Rippenpaars in einer Längsrichtung parallel gegenüberliegen und wobei jede Rippe in einer Höhenrichtung zumindest einen Rippenabschnitt aufweist, der zur gegenüberliegenden Rippe hin geneigt ist, wobei das System mindestens ein Rastelement und ein Fixierelement aufweist, die jeweils ausgebildet sind, mit den Rippen derart verbunden zu werden, dass eine Nase des Rastelements in einen Rastraum zwischen den Rippen des Rippenpaars eingreift, wobei die Nase so ausgebildet ist, dass die Rippe, während eines Einführens der Nase zwischen die Rippen, nach außen elastisch auseinandergedrückt werden und sich anschließend nach innen, in Richtung des Rastraums, zurückbewegen, so dass die Nase im Zustand des Eingriffs von den Rippen festgehalten wird, und dass erste Fixierbacken des Fixierelements, das benachbart zu der Nase des Rastelements angeordnet wird, die Rippen von außen derart fixiert halten, dass ein Aufbiegen der Rippen durch eine Bewegung der Nase aus dem Rastraum heraus verhindert wird.

Das Befestigungssystem der vorliegenden Erfindung wird zwischen Rippen eingeklemmt, die entweder auf einem Trägerbauteil angebracht werden oder bereits Teil des Trägerbauteils selbst sind. Die Rippen bauen üblicherweise relativ flach (< 10 mm) und sind trotzdem dazu in der Lage, relativ großen Abziehkräften (z.B. mehrere 100 Newton) zu bewirken. Das Befestigungssystem ist konstruktiv einfach und lässt sich lediglich durch Pressen am Trägerbauteil montieren.

Was den Formenbau betrifft, lässt sich auf einfache Weise ein Werkzeug herstellen, das ein Anformen der Befestigungsrippen ohne aufwendige Schieber ermöglicht. Hinterschneidungen, wie sie herkömmlicherweise im Zusammenhang mit Befestigungsrippen auftreten, sind bei der vorliegenden Erfindung aufgrund der Ausgestaltung (relativ geringe Materialstärke) der Rippen unproblematisch. Die Auswerfer können an nahezu jeder beliebigen Position vorgesehen werden. Aufgrund der geringen Bauhöhe können auch kleinste Räume genutzt werden, um die Rippen anzuformen. Aufwendige Schieber bzw. Schieberbewegungen innerhalb des Formwerkzeugs selbst, wie sie üblicherweise durch starke Hinterschneidungen hervorgerufen werden, werden vorliegend vermieden. So können die Rippen in Bereichen vorgesehen werden, wo üblicherweise keine Schieberbewegung möglich ist. Auch das Formwerkzeug für das Rastelement und/oder das Fixierelement ist ähnlich simpel aufgebaut.

Ein weiterer Vorteil ist in der einfachen und schnellen Montage zu sehen. Das Befestigungssystem kann ferner zerstörungsfrei demontiert werden. Somit kann das erfindungsgemäße Befestigungssystem beliebig oft montiert und demontiert werden.

Die vorliegende Erfindung ermöglicht eine standardisierte Verbindungstechnik.

Das Formwerkzeug zur Herstellung der Elemente des Befestigungssystems ist einfach ausgebildet, da das Befestigungssystem bzw. dessen Komponenten selbst kaum Hinterschnitte aufweist.

Gemäß einer bevorzugten Ausführungsform ist eine Außenkontur der Nase derart an eine Innenkontur der Rippen angepasst, dass die Nase im Wesentlichen formschlüssig zwischen die Rippen eingreifen kann.

Der Formschluss resultiert in einem sicheren Klemmsitz der Nase im einseitig offenen Rastraum, der durch die Rippen seitlich und das Trägerbauteil von unten begrenzt wird. Das Einführen der Rastnase allein zwischen die Rippen resultiert schon in einer nicht unbeachtlichen Haltekraft.

Außerdem ist es von Vorteil, wenn eine Innenkontur der ersten Fixerbacken derart an eine Außenkontur der Rippen angepasst ist, dass die ersten Fixierbacken im Wesentlichen formschlüssig außen an den Rippen anliegen können.

Auch hier trägt der Formschluss zu einer Steifung der Rippen bei. Die Versteifung unterstützt den Widerstand der Rippen gegenüber einer Verformung, wie sie durch das Herausziehen der Rastnase aus dem Rastraum hervorgerufen würde. Je länger der Formschluss in Längsrichtung ist und je kürzer die Rastnase und die Fixierbacken in Längsrichtung zueinander beabstandet sind, desto größer ist die Haltekraft des erfindungsgemäßen Befestigungssystems.

Bei einer weiteren bevorzugten Ausführungsform sind mindestens zwei Rastnasen vorgesehen, die derart miteinander verbunden sind, dass das Fixierelement zwischen den Rastnasen angeordnet werden kann.

Die Rastnasen schließen das Fixierelement - relativ zu den Rippen - zwischen sich ein. Das Fixierelement versteift die Rippen für beide Rastnasen, die links und rechts relativ zum Fixierelement angeordnet sind. Die Rastnasen sind miteinander verbunden, so dass das Rastelement verwindungssteif ist. Dies gewährleistet eine sichere Befestigung und hohe Haltekräfte.

Gemäß einer weiteren vorteilhaften Ausführungsform ist die Rastnase derart in der Längsrichtung zum Fixierelement versetzt, dass das Fixierelement im montierten Zustand des Systems ein Nach-Außen-Bewegen (Aufbiegen) der Rippen hindert.

Mit zunehmendem Abstand in Längsrichtung zwischen der Rastnase und dem Fixierelement bzw. den Fixierbacken des Fixierelements werden die Rippen zunehmend flexibler. Je näher die Rastnase in Längsrichtung zur Fixierbacke angeordnet ist, desto steifer sind die Rippen in Bezug auf Querbewegungen (Aufbiegen). Die Rastnase verhindert eine Biegung der Rippen nach innen, d.h. aufeinander zu. Das Fixierelement, und insbesondere die Fixierbacken, verhindern eine Bewegung der Rippen nach außen. Da die Rippen somit "steif" sind, kann die - zumindest in Teilbereichen - konisch ausgebildete Rastnase im Klemmsitz bzw. Passsitz nicht von den Rippen abgezogen werden. Ein Anbauteil, welches vorzugsweise mit dem Fixierelement verbunden ist, wird dann sicher gehalten.

Außerdem ist es von Vorteil, wenn das Fixierelement mindestens zwei sich in einer Querrichtung erstreckende Flügelabschnitte aufweist, die sich gegenüberliegen und an einen Mittelabschnitt angrenzen, der an seiner Unterseite mit den Fixierbacken verbunden ist, wobei mindestens einer der Flügelabschnitte derart elastisch ausgebildet ist, dass der Mittelabschnitt entlang einer Höhenrichtung aus einer ersten, gelösten offenen Stellung in eine zweite, verspannt geschlossene (verriegelte) Stellung bewegbar ist.

Die Elastizität der Flügelabschnitte des Fixierelements, das das Befestigungssystem insgesamt verriegelt, ermöglicht ein einfaches Öffnen und Schließen des Befestigungssystems.

Weiter ist es bevorzugt, wenn das Fixierelement zweite Fixierbacken aufweist, die gegenüber den ersten Fixierbacken innen liegen und die mit den ersten Fixierbacken Aussparungen definieren, die zur formschlüssigen Aufnahme der Rippen angepasst sind.

Die zweiten Fixierbacken, die genauso wie die Rastnase innen an den Rippen anliegen, sorgen zusätzlich für eine Versteifung der Rippen in Längsrichtung. Dies wiederum erhöht die Haltekraft des Befestigungssystems.

Gemäß einer weiteren vorteilhaften Ausgestaltung ist das Rastelement ein plattenförmiges Bauteil, das eine Öffnung aufweist, in welche das Fixierelement lösbar eingespannt werden kann, wobei in Längsrichtung verlaufende Abschnitte des Rastelements um die Öffnung herum vorzugsweise verstärkt ausgebildet sind.

Wenn das Fixierelement als separates Element hergestellt wird, erleichtert dies die Anbringung des Fixierelements an einem Anbauteil. Das Anbringen des Fixierelements am Anbauteil und das Anbringen des Rastelements am Trägerbauteil kann an getrennten Orten geschehen. Dies kann die Montage des Befestigungssystems erheblich vereinfachen. Außerdem kann das Fixierelement aus einem anderen Material als das Rastelement hergestellt werden. Da das Fixierelement zumindest teilweise elastisch ausgebildet ist (Flügelabschnitte) und das Rastelement vorzugsweise steif ausgebildet ist, kann die Wahl von zwei unterschiedlichen Materialien für diese Elemente vorteilhaft sein.

Bei einer bevorzugten Ausführungsform ist das Fixierelement derart ausgebildet, dass es in montiertem Zustand des Systems zumindest teilweise unter die in Längsrichtung verlaufenden Ränder der Öffnung eingespannt bzw. damit verriegelt werden kann.

Alternativ können das Rastelement und das Fixierelement einstückig in Form einer Platte ausgebildet sein.

Dies hat den Vorteil, dass lediglich ein einziges Element (spritzgusstechnisch) geformt werden muss. Die Gestalt des Rastelements und des Fixierelements erlauben es, das Befestigungssystem mit einem relativ simplen Formwerkzeug herzustellen. Das Werkzeug kann ohne Schieber vorgesehen werden, da das erfindungsgemäße Befestigungssystem üblicherweise keine Hinterschnitte aufweist. Wenn das erfindungsgemäße Befestigungssystem einstückig ausgebildet ist, lässt sich der lichte Abstand in Längsrichtung zwischen dem Fixierelement und dem bzw. den Rastelement(en) auf ein durch die Form vorgegebenes Minimum reduzieren.

Wenn das Befestigungssystem einstückig ausgebildet ist, werden die Flügelabschnitte vorzugsweise als Kniehebelmechanismus vorgesehen.

Die Kraft, die zum Betätigen, d.h. zum Verstellen, des Fixierelements aus seiner gelösten in seine verriegelte Stellung benötigt wird, ist auf ein Minimum reduziert. Die Kraft, die vonnöten ist, um das Fixierelement zu verriegeln oder zu entriegeln, ist üblicherweise bedeutend kleiner als die Haltekraft des Befestigungssystems.

Ferner ist es bevorzugt, wenn das Verhältnis zwischen der Stärke der Rippen und der Stärke des Trägerbauteils mindestens 1:3 beträgt.

Bei diesen Größenverhältnissen lassen sich Einfallstellen (Materialfehlstellen) auf der den Rippen abgewandten Seite des Trägerbauteils vermeiden, insbesondere wenn diese abgewandte Seite aus optischen Gründen noch lackiert wird.

Gemäß einer weiteren bevorzugten Ausführungsform ist das System aus Kunststoff spritzgegossen.

Die vorliegende Erfindung eignet sich besonders gut für Kunststoff als Verarbeitungsmaterial, da mit Kunststoff die, insbesondere doch recht kleinen, Abmessungen spritzgusstechnisch gut realisiert werden können.

Ferner ist es bevorzugt, wenn das System in der Automobilindustrie eingesetzt wird, insbesondere zur Befestigung von Anbauteilen - außen oder innen - an einer Karosserie.

Insbesondere wird ein Rastelement zum Einsatz in einem System der oben beschriebenen Art sowie ein Fixierelement zum Einsatz in einem System der oben beschriebenen Art vorgeschlagen.

Die obige Aufgabe wird zusätzlich durch ein Verfahren zum spritzgusstechnischen Herstellen eines Trägerbauteils gelöst, das an einer seiner Oberflächen mindestens ein Rippenpaar aufweist, wobei sich Rippen eines jeden Rippenpaars in einer Längsrichtung parallel gegenüberliegen und in einer Höhenrichtung zumindest jeweils einen Rippenabschnitt aufweisen, der zur gegenüberliegenden Rippe hin geneigt ist, mit den folgenden Schritten: Vorsehen einer Spritzgussform mit zumindest einer Matrize und einer Patrize, die zwischen sich einen Hohlraum definieren, der einem Körper des Trägerbauteils entspricht; Vorsehen eines Auswerfers oder Schiebers im Bereich eines Rippenpaars, wobei eine Kontur des Auswerfers bzw. des Schiebers an eine Kontur des Rippenpaars formschlüssig angepasst ist; Spritzen des Trägerbauteils; Öffnen der Patrize und Matrize; Auswerfen des Trägerbauteils, vorzugsweise durch Bewegen des Auswerfers bzw. Schiebers; und Abziehen des Trägerbauteils vom Auswerfer bzw. Schieber im Bereich der Rippen.

Wie bereits oben erwähnt, können die Rippen spritzgusstechnisch einfach hergestellt werden. Es sind vorzugsweise keine Schieber (Hinterschnitte) vorgesehen. Das Formwerkzeug kann die Rippen an Orten des Formteils vorsehen, die üblicherweise für Schieber nicht geeignet sind. Insbesondere werden die Rippen in Bereichen angeformt, die von Auswerfern des Formwerkzeugs beim Auswerfen berührt werden. Aufgrund der geringen geometrischen Größe können die Rippen an Stellen des Formteils vorgesehen werden, die von Schiebern normalerweise nicht entformt werden können. Vorzugsweise werden die Rippen nur in Bereichen vorgesehen, die mit Auswerfern korrespondieren.

Es versteht sich, dass die obigen Ausführungen auch für den Fall gelten, dass die Rippen am Anbauteil und das Rastelement und/oder das Fixierelement am Trägerbauteil ausgebildet sind.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine perspektivische Ansicht eines Befestigungssystems gemäß der vorliegenden Erfindung;
- Fig. 2: eine Draufsicht auf das Befestigungssystem der Fig. 1;
- Fig. 3: eine Schnittansicht entlang der Linie III-III der Fig. 2;
- Fig. 4: eine Schnittansicht entlang der Linie IV-IV der Fig. 2;
- Figs. 5A und 5B: jeweils eine Schnittansicht entlang der Linie V-V, wobei die Fig. 5A ein Fixierelement gemäß der vorliegenden Erfindung in einer geöffneten Stellung und Fig. 5B das Fixierelement in einer verriegelten Stellung zeigen;
- Figs. 6A-6D: einen Verriegelungsvorgang in Seitenansichten aus einer geöffneten, nicht verbundenen Stellung in eine verriegelte und verbundene Stellung;
- Fig. 7: ein Trägerbauteil Schnittansicht;
- Figs. 8A-8C: ein Formwerkzeug zur Herstellung des Trägerbauteils in verschiedenen Herstellungsstadien;
- Fig. 9: eine Abwandlung des Befestigungssystems der Fig. 1; und
- Fig. 10: ein Flussdiagramm zum Verfahren für die Herstellung eines Trägerelements gemäß der vorliegenden Erfindung.

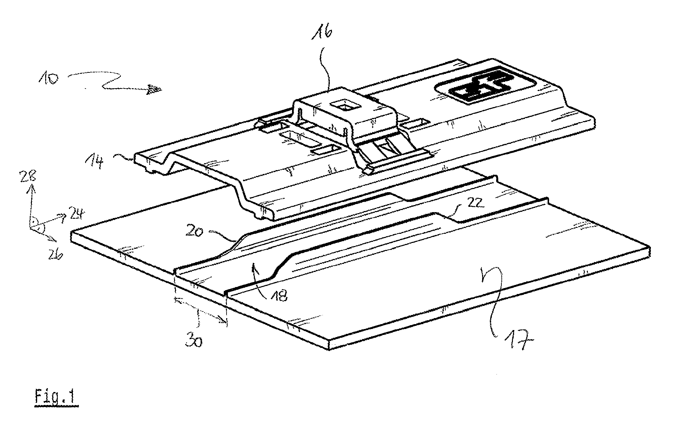

Fig. 1 zeigt eine perspektivische Ansicht eines Befestigungssystems 10 gemäß der vorliegenden Erfindung.

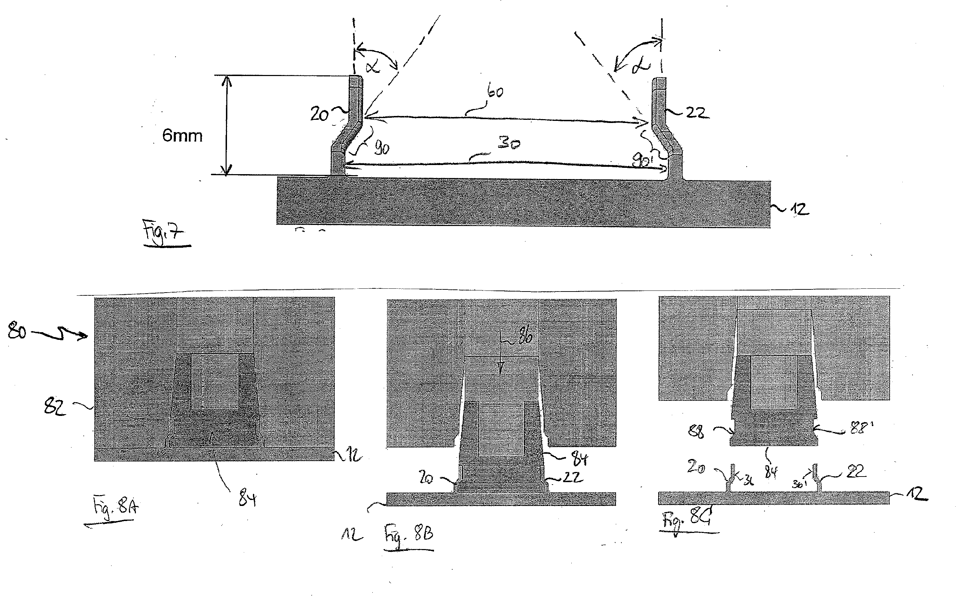

Das Befestigungssystem 10 wirkt mit einem hier plattenförmig ausgebildeten Trägerbauteil 12 zusammen und weist ein Rastelement 14 sowie ein Fixierelement 16 auf. Das Fixierelement 16 dient zum Verriegeln des Befestigungssystems 10 an einem Rippenpaar 18, welches hier aus einer Oberseite 17 des Trägerbauteils 12 senkrecht hervorsteht. Andere Winkel sind möglich. Das Rippenpaar 18 weist zwei Rippen 20, 22 auf, die sich, vorzugsweise parallel, in einer Längsrichtung (Axialrichtung) 24 erstrecken. Die Rippen 20, 22 sind in Querrichtung 26 zueinander beabstandet und stehen in einer Höhenrichtung 28 - im Wesentlichen - senkrecht hervor. Leichte Winkelabweichungen (z.B. ± 10°) sind zulässig. Der lichte Abstand 30 zwischen den Rippen 20, 22 ist in der Nähe des Trägerbauteils 12 größer als an gegenüber liegenden, freien Enden der Rippen. Die Rippen 20, 22 weisen zumindest Abschnitte (vgl. Fig. 7) auf, die zu einander hin geneigt sind. Das Rippenpaar 18 verjüngt sich somit mit zunehmender Entfernung von der Oberseite 17 des Trägerbauteils 12.

Es versteht sich, dass mehrere Rippenpaare 18, vorzugsweise parallel, in Querrichtung 26 benachbart zueinander angeordnet sein können. Die Rippen 20, 22 können in ihrem unteren Bereich, der der Oberseite 17 des Trägerbauteils 12 unmittelbar gegenüberliegt, schienenartig ausgebildet sein. An bevorzugten Positionen können die Rippen 20, 22 ihre schienenförmige Gestalt ändern, um ausreichend Fläche zum Wechselwirken mit dem Befestigungssystem 10 bereitzustellen, wie es in Fig. 1 gezeigt ist.

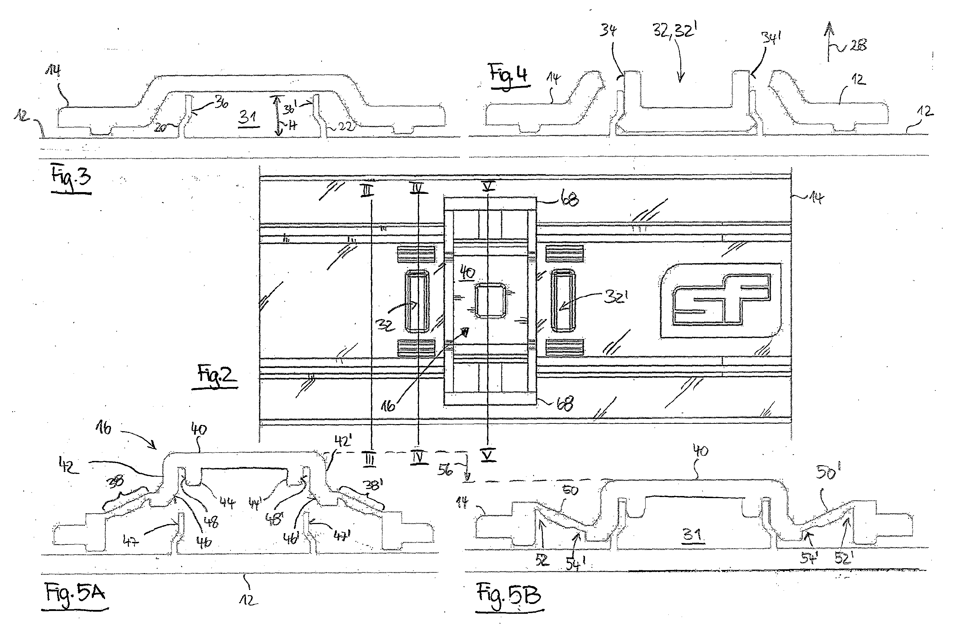

In Fig. 2 ist eine Draufsicht auf das Befestigungssystem 10 und das Trägerbauteil 12 der Fig. 1 gezeigt. Unter Bezugnahme auf die Figuren 3-5 werden nachfolgend Schnittansichten entlang den Linien III-III, IV-IV und V-V genauer erläutert. Das Rastelement 14 ist hier als rechteckiges, plattenförmiges Gebilde mit einem im Wesentlichen U-förmigen Querschnitt realisiert. Das Rastelement 14 weist hier exemplarisch zwei Rastnasen 32, 32' (vgl. auch Fig. 4) auf, die zwischen sich das Fixierelement 16 (vgl. auch Fig. 5A und 5B) aufnehmen. Das Fixierelement 16 ist hier einstückig mit dem Rastelement 14 ausgebildet und koppelt an vier Punkten elastisch an das Rastelement 14 an.

Bezug nehmend auf Fig. 3 ist ein Querschnitt durch das Trägerbauteil 12 mit seinen Rippen 20, 22 der Höhe H (z.B. 6 mm) und durch das U-förmige Rastelement 14 gezeigt. Der Querschnitt des U-förmigen Rastelements 14 ist so gewählt, dass das plattenförmige Rastelement 14 die Rippen 20, 22 innerhalb des durch den U-förmigen Querschnitt definierten Hohlraums gut aufnehmen kann. Vorzugsweise weist das Rastelement 14 an seiner Unterseite ein oder mehrere Kontaktpunkte bzw. -linien auf, die in der Fig. 3 nicht näher bezeichnet sind. Die Kontaktpunkte dienen zur Auflage des Rastelements 14 auf der Oberseite 17 des Trägerbauteils 12.

Bezug nehmend auf Fig. 4 ist eine Schnittansicht entlang der Linie IV-IV der Fig. 2 gezeigt. Hier befindet man sich im Bereich der Rastnase 32 (bzw. 32').

Die Rastnasen 32, 32' stehen aus dem U-förmigen Querschnitt des Rastelements 14 derart vor, dass die Rastnasen 32, 32' in Richtung des Trägerbauteils 12 orientiert sind. Die Außenkonturen 34, 34' der Nasen 32, 32' sind vorzugsweise so ausgebildet, dass sie in einem montierten Zustand des Systems 10 formschlüssig an Innenkonturen 36, 36' (vgl. Fig. 3) der Rippen 20, 22 anliegen. So wird ein Klemmsitz ermöglicht.

Wenn das Rastelement 14 in (negativer) Höhenrichtung 28 auf das Trägerbauteil 12 aufgesteckt wird, biegt ein vorderer Teil der Rastnasen 32, 32', der breiter als der nachfolgende gleichförmige Rest (vgl. Breite) der Rastnasen 32, 32' ausgebildet ist, die Rippen 20, 22 in Querrichtung 26 (vgl. Fig. 1) hinsichtlich eines Rastraums 31 nach außen. Der Rastraum 31 ist in Fig. 3 genauer gezeigt. Der Rastraum 31 ist einseitig nach oben offen und wird durch die Rippen 20, 22 sowie die Oberseite 17 des Trägerbauteils 12 zwischen den Rippen 20, 22 begrenzt. Die Rippen 20, 22 stehen im Wesentlichen lotrecht aus der Oberfläche 17 des Trägerbauteils 12 hervor und weisen zueinander hingeneigte Abschnitte 90 (vgl. Fig. 7) auf, die derart ausgebildet sind, dass die Rippen 20, 22 nach außen gebogen werden können, ohne abzubrechen und ohne dass beim Formen der Rippen 20, 22 Schieber für Hinterschnitte verwendet werden müssen. Darauf wird bei der vorliegenden Erfindung gänzlich verzichtet.

In Fig. 4 ist das Rastelement 14 in einem Zustand gezeigt, bei dem das Rastelement 14 bzw. dessen Nasen 32, 32' mit dem Trägerbauteil 12 durch Formschluss verbunden sind. Die Zuverlässigkeit der Verbindung hängt neben der Materialwahl auch von der Abmessung der aufeinander zugeneigten Abschnitte der Rippen 20, 22 in Querrichtung 26 ab. Je kürzer diese geneigten Rippenabschnitte ausgebildet sind, desto geringer ist die Haltekraft, die das Rastelement 14 am Trägerbauteil 12 hält. Die räumliche Ausdehnung in Längsrichtung 24 ist ein weiterer Faktor, der die Haltekraft beeinflusst.

Bezug nehmend auf die Figuren 5A und 5B ist das Fixierelement 16 relativ zu den Rippen 20, 22 des Trägerbauteils 12 in einem geöffneten (Fig. 5A) und einem verriegelten (Fig. 5B) Zustand gezeigt.

Wenden wir uns zuerst dem geöffneten Zustand der Fig. 5A zu. Das Fixierelement 16 ist hier einstückig mit dem Rastelement 14 ausgebildet. Das Fixierelement 16 ist über sog. Flügelabschnitte 38, 38' mit dem Rastelement 14 verbunden. Das Fixierelement 16 weist einen im Wesentlichen U-förmigen Mittelabschnitt 40 auf. Der Mittelabschnitt 40 weist wiederum erste, außen liegende Fixierbacken 42, 42' und vorzugsweise zweite, innen liegende Fixierbacken 44, 44' auf. Eine Innenkontur 46, 46' der ersten Fixierbacken 42, 42' ist vorzugsweise derart an eine Außenkontur 47, 47' der Rippen 20, 22 angepasst, dass die ersten Fixierbacken 42, 42' formschlüssig an den Rippen 20, 22 anliegen können. Eine Außenkontur 48, 48' der optionalen, zweiten Fixierbacken 44, 44' ist vorzugsweise formschlüssig an die Innenkontur 46, 46' der Rippen 20, 22 angepasst.

Die zweiten Fixierbacken 44, 44' können weggelassen werden. In den Figuren 5A und 5B definieren sie jedoch zusammen mit den ersten Fixierbacken 42, 42' jeweils einen Raum, der zur formschlüssigen Aufnahme der Rippen 20, 22, zumindest eines vorderen Teils der Rippen 20, 22 geeignet ist. Die zweiten Fixierbacken 44, 44' erhöhen eine Verwindungssteifigkeit der Rippen 20, 22 in einem eingerasteten Zustand, wie er in der Fig. 5B gezeigt ist.

Vergleicht man die Höhenniveaus der Mittelabschnitte 40 der Figuren 5A und 5B miteinander, so stellt man fest, dass das Fixierelement 16 in negativer Höhenrichtung entlang eines Pfeils 56 nach unten gedrückt wurde. Die Flügelabschnitte 38, 38' sind nun schräg nach unten orientiert. Die Flügelabschnitte 38, 38' stellen mit ihren (Verbindungs-)Stegen 50, 50' einen Kniehebelmechanismus dar. Außen liegende Aussparungen 52 zwischen dem Steg 50, 50' und dem Rastelement 14 werden beim Verriegeln des Fixierelements 16 gestaucht, wohingegen Ausnehmungen 54, 54' zwischen den Stegen 50 und dem Mittelabschnitt 40 gedehnt werden. Die Stege 50, 50' sind so ausgelegt, dass sie während eines Übergangs (Durchgang durch Todpunkt), bei dem die Flügelabschnitte 38 im Wesentlichen parallel zu dem Trägerbauteil 12 orientiert sind, derart verformt werden können, dass die Flügelabschnitte 38, 38' nicht brechen, sondern die Verformungsenergie lediglich aufnehmen und sich anschließend beim Überwinden des Todpunkts entspannen, um in der Stellung der Fig. 5B unter Spannung zur Ruhe zu kommen.

Es versteht sich, dass die vertikal orientierten Fixierbacken 42, 42' bzw. 44, 44' in der Längsrichtung 24 nicht durchgehend ausgebildet sein müssen. Sie können auch diskontinuierlich in der Längsrichtung 24 ausgebildet sein. Gleiches gilt für eine Verbindung zwischen den Backen des zweiten Fixierbackenpaars 44, 44'. In Fig. 1 sind die zweiten Fixierbacken 44, 44' in Bereichen des Fixierelements 16 durchgehend ausgebildet, die in der Längsrichtung 24 außen liegen. Von unten betrachtet, bilden dann die zweiten Fixierbacken 44, 44' mit ihren beiden außen liegenden Verbindungsstreben (hier nicht näher bezeichnet) einen verwindungssteifen, rechteckigen Ring, wobei der Mittelabschnitt 40 des Fixierelements 16 in seiner Mitte vorzugsweise eine fensterartige Öffnung aufweist, wie es exemplarisch in der Fig. 1 gezeigt ist. Diese Öffnung kann benutzt werden, um bspw. mit einem Schraubenzieher das Fixierelement 16 aus der verriegelten Stellung der Fig. 5B in die geöffnete Stellung der Fig. 5A zu bewegen. Je stärker das Material in diesem Bereich der fensterartigen Öffnung des Mittelabschnitts 40 ausgebildet ist, desto geringer ist die Gefahr einer Beschädigung des Befestigungssystems 10 beim wiederholten Schließen und Öffnen desselben.

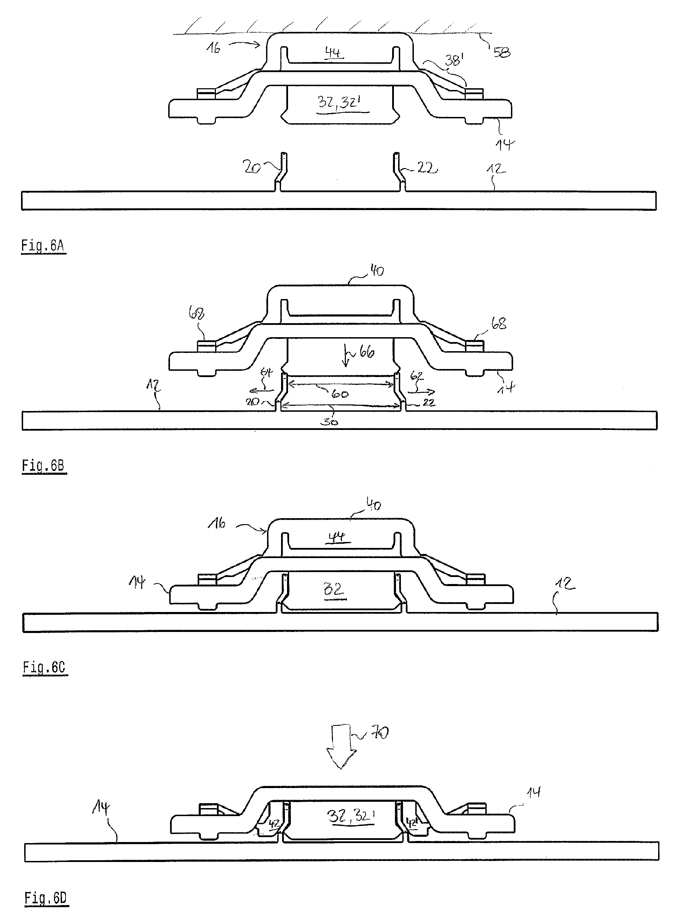

Bezug nehmend auf die Figuren 6A-6D wird nachfolgend ein Befestigungs- und Verriegelungsvorgang des Befestigungssystems 10 an einem Trägerbauteil 12 mit Rippen 20, 22 detaillierter erläutert werden, wobei das Rastelement 14 gleichzeitig mit dem Fixierelement 16 jeweils in einer Seitenansicht gezeigt ist.

In Fig. 6A ist ein anfänglicher Zustand gezeigt, bei dem das Befestigungssystem 10 noch von dem Trägerbauteil 12 gelöst ist. Exemplarisch ist in der Fig. 6A ein Anbauteil 58 gezeigt, welches hier flächig mit dem Fixierelement 16, und insbesondere dem Mittelabschnitt 40, z.B. durch Kleben oder Wärmeschweißen, verbunden ist. Es versteht sich, dass das Bauteil 58 auch direkt an das Fixierelement 16 angeformt werden kann. In den nachfolgenden Figuren 6B-6D wird dieses Anbauteil 58 aus Gründen einer einfacheren Darstellung nicht mehr gezeigt werden.

In Fig. 6B ist ein Zustand gezeigt, kurz bevor die Rastnasen 32, 32' zwischen die Rippen 20, 22 greifen. Der lichte Abstand 60 zwischen den freien Enden der Rippen 20, 22 ist kleiner als der lichte Abstand 30 zwischen den unteren Enden der Rippen 20, 22. Da die Rastnasen 32, 32' an ihrem dem Rastelement 14 abgewandten Ende breiter als der restliche Körper der Rastnasen 32, 32' ausgebildet sind, zwingen die Rastnasen 32, 32' die Rippen 20, 22 quer in Richtung der Pfeile 64 nach außen, wenn das Befestigungssystem 10 entlang eines Kraftpfeils 66 auf das Trägerbauteil 12 zu bewegt wird, um in seinen Klemmsitz zu gelangen.

In Fig. 6C ist ein Zustand gezeigt, bei dem das Rastelement 14 bereits in den Rastraum 31 zwischen den Rippen 20, 22 eingerastet ist. Die elastisch ausgebildeten Rippen 20, 22, deren Gestalt formschlüssig an die Gestalt der Rastnasen 32, 32' angepasst ist, liegen im Wesentlichen vollständig an den Rastnasen 32, 32' an. Das System 10 ist mit dem Trägerbauteil 12 verbunden. Das Rastelement 14 befindet sich jedoch noch in seiner geöffneten Stellung.

In Fig. 6D ist ein Zustand gezeigt, bei dem auch das Fixierelement 16 in seinen geschlossenen, eingerasteten Zustand gebracht wurde. Die ersten Fixierbacken 42, 42' liegen formschlüssig an den Außenkonturen der Rippen 20, 22 an. Die innen gelegenen zweiten Fixierbacken 44, 44' sind in der Darstellung der Fig. 6D nicht mehr zu erkennen. Um den Widerstand des Kniehebelmechanismus zu überwinden, wird das Fixierelement 16 mit Hilfe einer im Wesentlichen senkrecht zum Trägerbauteil 12 wirkenden Anpresskraft 70 eingerastet.

In der Fig. 6D ist gut zu erkennen, dass die Rastnasen 32, 32' die Rippen 20, 22 von innen halten. Die ersten Fixierbacken 42, 42' halten die Rippen 20, 22 von außen. Die Rastnasen 32, 32' werden innen des Weiteren von den zweiten Fixierbacken 44, 44' unterstützt, soweit diese vorgesehen sind. Die ersten Fixierbacken 42, 42' verhindern ein Aufbiegen der Rippen 20, 22, sollten Kräfte auf das Befestigungssystem 10 wirken, die die Rastnasen 32, 32' entgegengesetzt zum Pfeil 70 zwingen. Die Kräfte, die erforderlich sind, um die Rastnasen 32, 32' außer Eingriff mit den Rippen 20, 22 zu bringen, sind bedeutend größer als die Anpresskraft 70, die benötigt wird, um das Fixierelement 16 zu verriegeln.

Für die nachfolgende Kräftebetrachtung wird nochmals Bezug auf die Draufsicht der Fig. 2 genommen. Die Rastnasen 32, 32' wirken von innen auf die Rippen 20, 22. Die ersten Fixierbacken 42, 42' wirken von außen auf die Rippen 20, 22'. Je näher die Rastnasen 32, 32' in der Längsrichtung 24 zu den Fixierbacken 42, 42', 44, 44' angeordnet sind, desto steifer werden die Rippen 20, 22 und verhindern so ein Herausbewegen der Rastnasen 32, 32' aus dem Klemmsitz. Die in Fig. 2 gezeigten schlitzartigen Ausnehmungen zwischen den Rastnasen 32, 32' und dem Fixierelement 16 sind dadurch bedingt, dass das Befestigungssystem 10 der Fig. 2 einstückig ausgebildet ist. Um das Befestigungssystem 10 auf möglichst einfache Art und Weise herzustellen, d.h. mit einem einzigen Formwerkzeug, ohne jedoch Schieber verwenden zu müssen, muss das Fixierelement 16 ausreichend zu den Rastnasen 32, 32' beabstandet sein, um gegenüber diesen flexibel ausgebildet werden zu können. Die Flügelabschnitte 38, 38' weisen selbst wiederum Ausnehmungen auf, um eine möglichst hohe Elastizität zu gewährleisten.

Abweichend von der einstückigen Ausbildung können das Rastelement 14 und das Fixierelement 16 jedoch auch separat voneinander hergestellt und eingesetzt werden. Dies hat den Vorteil, dass das Fixierelement 16 aus einem anderen Material als das Rastelement 14 hergestellt werden kann. Für das Fixierelement 16 kann so z.B. ein Polyamidwerkstoff verwendet werden, der eine hohe Härte bei ausreichender Elastizität hat, um eine hohe Anzahl von Montage- und Demontagevorgängen durchführen zu können.

Das Rastelement 14 weist dann zwischen den Rastnasen 32, 32' eine - hier rechtförmig ausgebildete - Öffnung 33 zur Aufnahme des Fixierelements 16 auf. In diesem Fall werden Längsabschnitte 68 des Rastelements 14 im Bereich der Öffnung 33 bevorzugt verstärkt ausgebildet. Diese Verstärkungsstege sind in den Figuren mit 68 bezeichnet. Die Verstärkungsstege 68 sind so dimensioniert, dass sie die durch die elastischen Flügelabschnitte 38, 38' hervorgerufenen Spannkräfte - insbesondere im verriegelten Zustand des Fixierelements 16 - gut und sicher aufnehmen können.

Fig. 7 zeigt das Trägerbauteil 12 der vorherigen Figuren in isolierter und vergrößerter Darstellung.

Die Rippen 20, 22 sind hier exemplarisch 0,8 mm stark und weisen eine exemplarische Gesamthöhe von 6 mm auf Die Rippen 20, 22 sind hier ungefähr 10 mm von einander beabstandet (Abstand 30). Es versteht sich, dass die Rippen auch einen anderen Abstand 30 haben können, wie z.B. 10 - 18 mm. Herkömmliche Rippen hatten eine Gesamthöhe von mindestens 10 mm, üblicherweise 15 bis 20 mm, wenn sie als Ankopplungspunkte insbesondere in der Automobilindustrie eingesetzt wurden. Die Rippen 20, 22 weisen jeweils zumindest einen (Längen-)Abschnitt 90 bzw. 90' auf, der zu der gegenüberliegenden Rippe 20, 22 hin geneigt ist. Diese schrägen Abschnitte 90 können sich über die gesamte Höhe bzw. Länge der Rippen 20, 22 oder auch nur über Teilbereiche erstrecken. Im Beispiel der Fig. 7 sind die schrägen Abschnitte 90, 90' derart gewählt, dass sich die Rippen 20, 22 im Wesentlichen vertikal, mit einem leichten Versatz in horizontaler Richtung, erstrecken. Die schrägen Abschnitte 90, 90' bilden jeweils einen Winkel α mit der Lotrechten und sorgen so dafür, dass der lichte Abstand 30 im unteren Bereich der Rippen 20, 22 größer als zwischen freien oberen Ende der Rippen 20, 22 (Abstand 60) ist. Einmal eignen sich Winkel α besser, die kleiner als vorzugsweise 45 Grad sind, da eine Kraft, die zum Öffnen der Verriegelung des Befestigungssystems 10 aufgewendet werden muss, senkrecht auf die Fläche der schrägen Abschnitte 90, 90' wirken muss. Geht man davon aus, dass Abziehkräfte senkrecht zum Trägerbauteil bzw. senkrecht zum parallel dazu angeordneten Anbauteil wirken, ist der o.g. Winkelbereich sicherlich von Vorteil. Es versteht sich, dass der Winkelbereich stark vom jeweiligen Anwendungsfall abhängt. Wird das oben beschriebene Befestigungssystem 10 beispielsweise zur Befestigung von Fassadenelementen im Häuserbau verwendet, wirkt die Abziehkraft im Wesentlichen senkrecht zur Ebene des Trägerbauteils 12. Hier wären also (Rippen-)Winkel von Vorteil, die größer als 45 Grad sind.

Bezug nehmend auf die Fig. 8A - C sind drei Verfahrensschritte zum Herstellen des Trägerbauteils 12 mit angeformten Rippen 20, 22 gezeigt, wie es im Zusammenhang mit den oben erläuterten Figuren eingesetzt wurde.

Fig. 8A zeigt ein Formwerkzeug 80, das eine Matrize und eine Patrize 82 aufweist, wobei die Matrize aus Gründen der Vereinfachung hier nicht dargestellt ist, die üblicherweise der Patrize 82 um den Trägerbauteil gegenüberliegend angeordnet ist. Im Bereich der Rippen 20, 22 weist die Patrize 82 einen Auswerfer 84 auf.

Nachdem das Trägerbauteil 12 (z.B. ein Stoßfänger eines Kraftfahrzeugs) durch Einspritzen z.B. eines Kunststoffes in den Hohlraum zwischen der Matrize und der Patrize 82 gebildet ist, werden die Matrize und die Patrize 82 auseinander gefahren. Anschließend wird durch eine Hubbewegung 86 des Auswerfers 84 das Formteil 12 entformt, d.h. von der Patrize gelöst, wie es in Fig. 8B dargestellt ist.

Der Auswerfer 84 weist eine Außenkontur 88, 88' auf, die zum Bilden der Innenkonturen 36, 36' angepasst ist. In Fig. 8C ist ein Zustand gezeigt, bei dem das Trägerbauteil 12 vom Auswerfer 84 abgezogen wurde. Die Rippen 20, 22 sind zu diesem Zeitpunkt schon derart flexibel, dass sie sich nach außen biegen lassen, um den Weg für den Schieber 84 freizugeben. Das Formwerkzeug 80 kommt also ohne jeglichen Schieber aus.

Diese Art der Herstellung des Trägerbauteils 12 hat den Vorteil, dass die Rippen 20, 22 nahezu an jedem beliebigen Ort des Formteils 12 vorgesehen werden können. Die Rippen 20, 22 können auch an Orten vorgesehen werden, die von einem herkömmlichen Schieber nicht angefahren werden können.

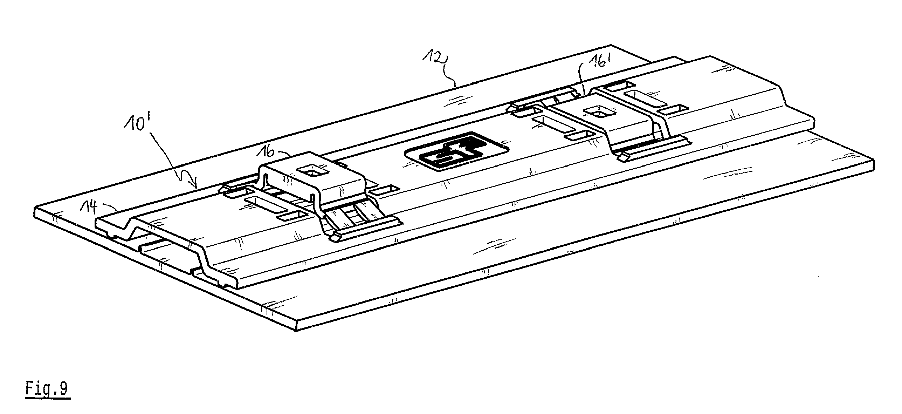

Bezug nehmend auf Fig. 9 ist eine perspektivische Ansicht einer Abwandlung des erfindungsgemäßen Befestigungssystems 10' gezeigt. Rastnasen 32, 32' und Fixierelemente 16 lassen sich in beliebiger Reihenfolge beliebig oft wiederholen, um eine Art Befestigungsschiene (z.B. für Schwellerverkleidung) zu bilden.

Das Befestigungssystem 10' unterscheidet sich vom Befestigungssystem 10 darin, dass mehrere Fixierelemente 16, 16' hier zwei Stück, nebeneinander angeordnet sind, die mit ein und demselben Rastelement 14 wechselwirken. Das linke Fixierelement 16 ist einstückig mit dem Rastelement 14 ausgebildet. Das rechte Fixierelement 16' ist separat vom Rastelement 14 ausgebildet. Das Fixierelemenet 16 ist in seiner geöffneten Stellung gezeigt. Das Fixierelement 16' ist in seiner verriegelten Stellung gezeigt.

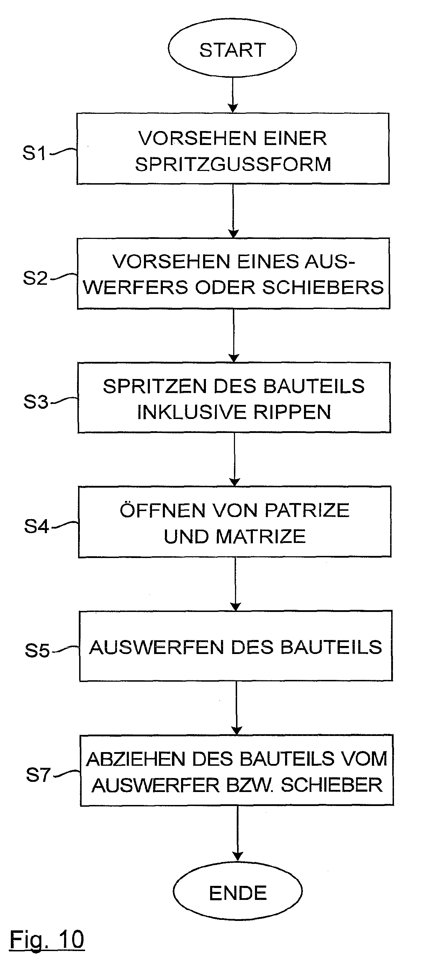

Bezug nehmend auf Fig. 10 ist das erfindungsgemäße Verfahren zum spritzgusstechnischen Herstellen eines Trägerbauteils gezeigt, wie oben erläutert ist. In einem ersten Schritt S1 wird eine Spritzgussform 80 vorgesehen, die zumindest eine Matrize und eine Patrize 82 aufweist. Die Matrize und die Patrize 82 definieren zwischen sich einen Hohlraum, der einem Körper des Trägerbauteils 12 (inklusive der Rippen 20, 22) entspricht. In einem Schritt S2 wird ein Auswerfer 83 bzw. ein Schieber im Bereich jedes Rippenpaars 18 vorgesehen, wobei eine Kontur des Auswerfers 84 bzw. des Schiebers an eine Kontur des Rippenpaars 18 vorzugsweise formschlüssig angepasst ist. In einem Schritt S3 wird das Trägerbauteil 12 gespritzt. In einem Schritt S4 werden die Patrize 82 und Matrize geöffnet, indem die Platten des Werkzeugs 80 auseinander gefahren werden. In einem Schritt S5 wird das Trägerbauteil 12 ausgeworfen, vorzugsweise durch Bewegen des Auswerfers 84 aus der Patrize 82 heraus. In einem Schritt S6 wird das Trägerbauteil 12 anschließend vom Auswerfer 84 bzw. dem Schieber im Bereich der Rippen 20, 22 abgezogen.

Es versteht sich, dass die Rippen 20, 22 auch einen von 90° abweichenden Winkel mit der Oberseite 17 bilden können. Die Rippen 20, 22 sind im eingebauten Zustand des Befestigungssystems vorzugsweise lotrecht angeordnet.

## Patentansprüche

1. System (10) zum Befestigen eines Anbauteils (58) an einem Trägerbauteil (12), wobei das Trägerbauteil (12) an einer seiner Oberflächen (17) mit mindestens einem Rippenpaar (18) versehen ist, wobei sich Rippen (20, 22) eines jeden Rippenpaars (18) in einer Längsrichtung (24) parallel gegenüberliegen und wobei jede Rippe (20, 22) in einer Höhenrichtung (28) zumindest einen Rippenabschnitt (90) aufweist, der zur gegenüberliegenden Rippe (22, 20) hin geneigt ist, wobei das System (10) mindestens ein Rastelement (14) und ein Fixierelement (16) aufweist, die jeweils ausgebildet sind, mit den Rippen (20, 22) derart verbunden zu werden, dass eine Nase (32) des Rastelements (14) in einen Rastraum (31) zwischen den Rippen (20, 22) des Rippenpaars (18) eingreift, wobei die Nase (32) so ausgebildet ist, dass die Rippen (20, 22) während eines Einführens (66) der Nase (32) zwischen die Rippen (20, 22) nach außen elastisch auseinander gedrückt (62, 64) werden und sich anschließend nach innen, in Richtung des Rastraums (31) zurückbewegen, so dass die Nase (32) in einem Klemmsitz zwischen den Rippen (20, 22) gehalten wird, und dass erste Fixierbacken (42, 42') des Fixierelements (16), das in Längsrichtung benachbart zu der Nase (32) des Rastelements (14) angeordnet wird, die Rippen (20, 22) von außen derart fixiert halten, dass ein Aufbiegen der Rippen (20, 22) durch eine Bewegung der Nase (32) aus dem Rastraum (31) verhindert wird.

2. System nach Anspruch 1, wobei eine Außenkontur (34, 34') der Nase (32) derart an eine Innenkontur (36, 36') der Rippen (20, 22) angepasst ist, dass die Nase (32) im Wesentlichen formschlüssig zwischen die Rippen (20, 22) eingreifen kann.

3. System nach Anspruch 1 oder 2, wobei eine Innenkontur (46, 46') der ersten Fixierbacken (42, 42') derart an eine Außenkontur (47, 47') der Rippen (20, 22) angepasst ist, dass die ersten Fixierbacken (42, 42') im Wesentlichen formschlüssig außen an den Rippen (20, 22) anliegen können.

4. System nach einem der vorhergehenden Ansprüche, wobei mindestens zwei Rastnasen (32, 32') vorgesehen sind, die derart miteinander verbunden sind, dass das Fixierelement (16) zwischen den Rastnasen (32, 32') angeordnet werden kann.

5. System nach einem der vorhergehenden Ansprüche, wobei die Rastnase (32) derart in der Längsrichtung (24) gegenüber dem Fixierelement (16) versetzt angeordnet ist, dass das Fixierelement (16) im montierten Zustand des Systems (10) ein Aufbiegen (62, 64) der Rippen (20, 22) verhindert.

6. System nach einem der vorhergehenden Ansprüche, wobei das Fixierelement (16) zwei sich in einer Querrichtung (26) erstreckende Flügelabschnitte (38, 38') aufweist, die sich gegenüberliegen und an einen Mittelabschnitt (40) angrenzen, der an seiner Unterseite (41) mit den Fixierbacken (42, 42') versehen ist, wobei mindestens einer der Flügelabschnitte (38, 38') derart elastisch ausgebildet ist, dass der Mittelabschnitt (40) entlang einer Höhenrichtung (28) aus einer ersten offenen Stellung (Fig. 5A) in eine zweite, verspannt geschlossene Stellung (Fig. 5B) bewegbar ist.

7. System nach einem der vorhergehenden Ansprüche, wobei das Fixierelement (16) zweite Fixierbacken (44, 44') aufweist, die relativ zu den ersten Fixierbacken (42, 42') innen liegen und die mit den ersten Fixierbacken (42, 42') eine Aussparung im Fixierelement (16) definieren, die zur formschlüssigen Aufnahme der Rippen (20, 22) angepasst ist.

8. System nach einem der vorhergehenden Ansprüche, wobei das Rastelement (14) ein plattenförmiges Bauteil ist, das eine Öffnung (33) aufweist, in welche das Fixierelement (16) lösbar eingespannt werden kann, wobei in Längsrichtung (24) verlaufende Abschnitte (68) des Rastelements (14) um die Öffnung (33) vorzugsweise verstärkt ausgebildet sind.

9. System nach Anspruch 8, wobei das Fixierelement (16) derart ausgebildet ist, dass es im montierten Zustand des Systems (10) zumindest teilweise unter die in Längsrichtung verlaufenden Abschnitte (68) im plattenförmigen Bauteil (14) greift.

10. System nach einem der Ansprüche 1 bis 7, wobei das Rastelement (14) und das Fixierelement (16) einstückig in Form einer Platte ausgebildet sind.

11. System nach Anspruch 6, wobei die Flügelabschnitte (38, 38') als Kniehebelmechanismen vorgesehen sind.

12. System nach einem der vorhergehenden Ansprüche, wobei die Stärke der Rippen (20, 22) ein Verhältnis von mindestens 1:3 mit der Stärke des Trägerbauteils (12) bildet.

13. Rastelement (14) zum Einsatz in einem System gemäß einem der Ansprüche 1 bis 12.

14. Fixierelement (16) zum Einsatz in einem System gemäß einem der Ansprüche 1 bis 15.

15. Verfahren zum spritzgusstechnischen Herstellen eines Trägerbauteils (12), das an einer seiner Oberflächen (17) mindestens ein Rippenpaar (18) aufweist, wobei sich Rippen (20, 22) eines jeden Rippenpaars (18) in einer Längsrichtung (24) parallel gegenüberliegen und in einer Höhenrichtung (28) zumindest jeweils einen Rippenabschnitt (90) aufweisen, der zur gegenüberliegenden Rippe (20, 22) hin geneigt ist, mit den folgenden Schritten:
Vorsehen (S1) einer Spritzgussform (80) mit zumindest einer Matrize und einer Patrize (82), die zwischen sich einen Hohlraum definieren, der einem Körper des Trägerbauteils (12) entspricht;
Vorsehen (S2) eines Auswerfers (84) oder Schiebers im Bereich eines Rippenpaars (18), wobei eine Kontur des Auswerfers (84) bzw. Schiebers an eine Kontur des Rippenpaars (18) formschlüssig angepasst ist;
Spritzen (S3) des Trägerbauteils (12);
Öffnen (S4) der Patrize (82) und Matrize;
Auswerfen (S5) des Trägerbauteils (12), vorzugsweise durch Bewegen des Auswerfers (84) bzw. Schiebers; und
Abziehen (S6) des Trägerbauteils (12) vom Auswerfer (84) bzw. Schieber im Bereich der Rippen.
